Europäisches Patentamt

European Patent Office

Office européen des brevets

(11) Publication number: **0 057 068**
**B1**

# (12) EUROPEAN PATENT SPECIFICATION

(45) Date of publication of patent specification: **23.10.85**

(21) Application number: **82300206.8**

(22) Date of filing: **15.01.82**

(51) Int. Cl.⁴: **G 01 N 29/00, G 01 N 27/90**

(54) Improvements in or relating to non-destructive testing apparatus.

(30) Priority: **27.01.81 GB 8102501**

(43) Date of publication of application:
**04.08.82 Bulletin 82/31**

(45) Publication of the grant of the patent:
**23.10.85 Bulletin 85/43**

(84) Designated Contracting States:
**BE DE FR NL SE**

(56) References cited:
**DE-A-1 811 079**
**DE-A-2 854 374**
**DE-B-2 652 085**
**GB-A-2 014 317**
**GB-A-2 015 736**
**US-A-3 540 266**

(73) Proprietor: **British Steel Corporation**
**9 Albert Embankment**
**London SE1 7SN (GB)**

(72) Inventor: **Cornforth, Alexander Rankin**
**2 Kettering Road**
**Stanion, Kettering Northamptonshire (GB)**
Inventor: **Lane, Richard Barry**
**5 Vine Close**
**Oundle, Peterborough Northamptonshire (GB)**
Inventor: **James, Clifford Thomas**
**21 Finch Hattom Drive**
**Gretton, Corby Northamptonshire (GB)**

(74) Representative: **Heath, Peter William Murray**
**FRY HEATH & CO. Seloduct House**
**16-18 Station Road**
**Redhill Surrey RH1 1NF (GB)**

Courier Press, Leamington Spa, England.

## Description

This invention relates to non-destructive testing apparatus for testing elongate metal bodies such as steel tubes.

In the longitudinal weld method of steel tube production, strip is bent, commonly after heating, in a forming mill into a tubular shape. The tubular shaped strip is thereafter joined along the now abutting edges by one of a number of alternative techniques such as electric resistance welding, or burner jet welding for example.

It is commonly desired to test the weld line of tubes so produced for faults.

German Patent Specification DE—A1—2854374 discloses an arrangement of weld line examination of longitudinally welded metal tubes by means solely of ultrasonic means and does not disclose or illustrate any specific form of weld line following.

German Patent Specification DE—A—1811079 discloses an arrangement for testing for defects in the weld line of a metal pipe by means solely of a flux-leakage electromagnetic system with an integrally linked facility for following the weld as such.

U.S.A. Patent Specification US—A—3540266 discloses apparatus for tracking a weld line as such by mechanical means whilst supporting weld inspection device over the weld.

According to the invention there is provided non-destructive testing apparatus for testing a longitudinally welded elongate metal body travelling in the direction of its long axis, the apparatus comprising a plurality of sets of ultrasonic weld line inspection devices mounted on and supported by a rotatable carrier which, in use, is located about the path of travel of the body; an eddy current weld inspection device mounted on said carrier; weld line following means connected to the carrier for detecting and following a datum mark along the body; and traversing means controlled by the weld line following means for moving the carrier and the inspection devices about said path of travel to maintain the carrier in a predetermined angular relationship with the datum mark along the body.

In one embodiment the apparatus may comprise in combination, an eddy current weld line inspection assembly incorporating said carrier, two sets of ultrasonic weld line inspection devices carried by the eddy current inspection device and located one before and one after the eddy current assembly in the path of the elongate metal body to be tested which ultrasonic devices may be adapted to operate one by means of surface wave techniques and the other by means of shear wave techniqes; and weld line following equipment carried by the eddy current weld line inspection assembly.

The weld line following equipment may comprise optical weld line following equipment adapted for example to follow a paint line applied to the elongate object at the same time as weld formation, but separated from the weld line around the periphery of the elongate object.

It has been considered hitherto that the close association of eddy current and ultrasonic inspection arrangements would be mutually detrimental, and that each would hinder and adversely affect the operation of the other. However we have found it is possible to associate both forms of testing closely with each other with satisfactory and accurate testing of both forms of arrangement. In practice this enables the provision of these two forms of testing arrangement, with their complimentary characteristics, to be carried out simultaneously with considerable saving in operation time and cost.

The ultrasonic weld line inspection devices may comprise probes carried on shoes mounted in gimbal fashion for freedom of movement to accommodate the variation in the surface of the object to be tested and to enable immediate and automatic contact with the surface of the object as the object passes through the apparatus. Travel limiting means may be provided so as to provide a reasonably restricted movement of the shoes to avoid the possibility of damage in the event of excessive deviation in the surface for example of the object to be tested.

The eddy current inspection device may likewise comprise one or more probes carried by a limited travel gimbal carried shoe.

The ultrasonic weld line inspection device and the eddy current inspection device may be mounted for movement on a hollow stator about the path of the object to be tested. The movement may be provided by means of a rotor by which the inspection devices are carried and driven for example by means of a driving belt from an adjacent motor, and may be capable of movement through an arc of up to 180° or even 360° with some arrangements about the path of the object to be tested.

Each of the devices may be mounted on arc-shaped members detachably secured to the rotor member and which may be capable of easy removal, together with their associated inspection devices.

The apparatus may include a calibration rig for the ultrasonic devices closely associated therewith, the rig comprising an annular member to which the arc-shaped members carrying the ultrasonic devices may be connected for calibration in relation to standard work-pieces which can be located within the calibration device.

The apparatus may be mountable on a table capable of vertical movement, and replacement inspection devices of various dimensions may be available so that the apparatus is capable of the testing on an in-line basis elongate objects of varying outer dimensions.

In order that the present invention may be more readily understood one embodiment thereof will now be described by way of example with reference to the accompanying drawings in which:—

Figure 1 is an end elevation of non-destructive testing apparatus according to the invention;

Figure 2 is a plan of the apparatus of Figure 1;

Figure 3 is an enlarged side sectional elevation of part of the apparatus of Figure 1;

Figure 4 is an enlarged side sectional elevation of a further part of the apparatus of Figure 1;

Figure 5 is an under plan view of the eddy current testing probe shoe used in the apparatus of Figure 1; and

Figure 6 is an under plan view of the eddy current weld line following probe shoe used in the apparatus of Figure 1.

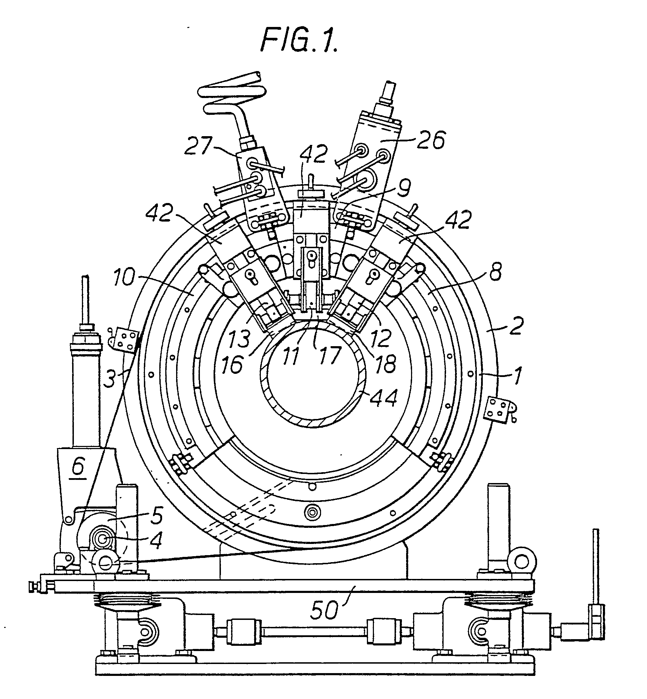

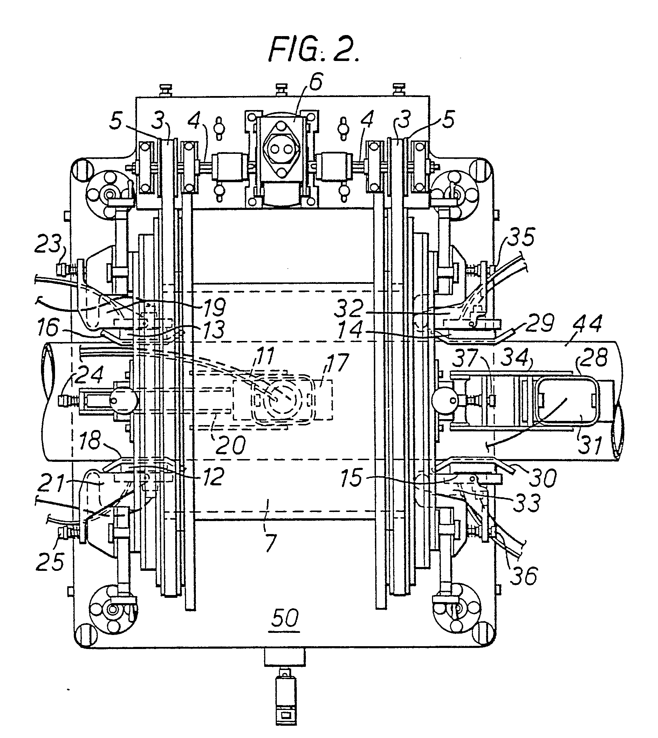

As will be seen particularly from Figures 1 and 2 the apparatus generally comprises a rotor 1 mounted by means of bearings (not shown) for rotation upon an annular stator assembly 2. The rotor 1 is arranged to be driven by a pair of belts 3 connected to shafts 4 and pulleys 5 extended from a pneumatic motor 6 alongside the stator.

The stator carries a saturation coil 7 disposed in annular form for the eddy current testing arrangement.

Attached to each end of the rotor are a number of arc segments 8, 9, 10 each having annular grooves. Eddy current and ultrasonic testing devices 11, 12, 13, 14 and 15 respectively, are arranged to be carried in the grooves of appropriate arc members.

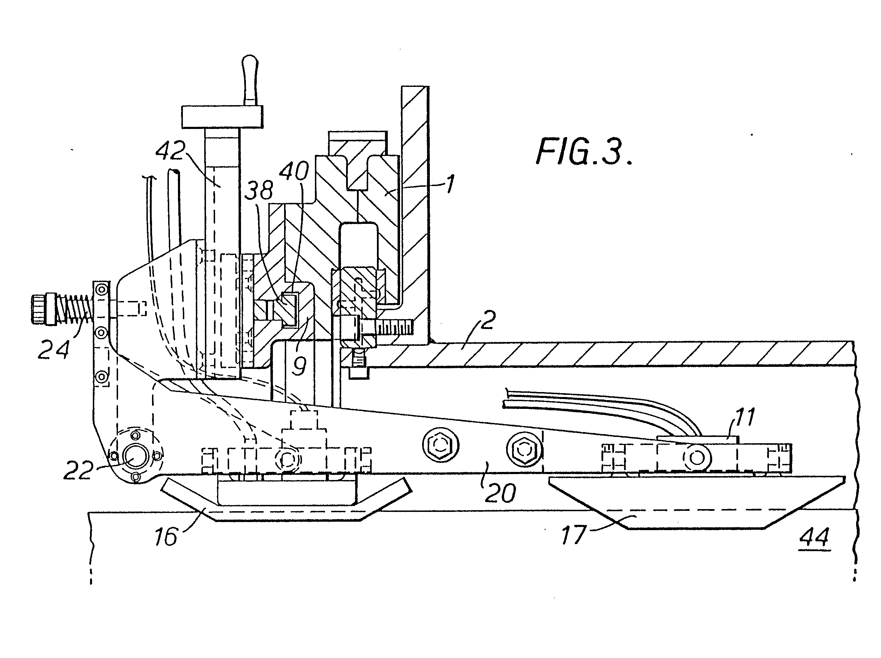

Located on arc members at the leading end of the apparatus are ultrasonic probe devices 12 and 13, one of which is illustrated in detail in Figure 3, together with the eddy current testing device 11 also shown in enlarged form in Figure 3.

It will be seen from Figures 2 and 3 that each of these devices comprises a gimbal mounted shoe 16, 17 and 18 respectively, carrying a probe assembly mounted on a floating arm 19, 20 and 21 respectively, which is capable of pivoting movement about an axle such as 22, limited by set screws, 23, 24 and 25 respectively.

It will be observed from Figures 2 and 3 that the eddy current fault detector is mounted on extended arm 20 so as to be located axially centrally within the flux core assembly 7.

Manifold assemblies 26 and 27 for electrical connection to the various probe assemblies and for fluid connections for coupling purposes to the ultrasonic probe assemblies respectively are mounted also on the rotor at each end.

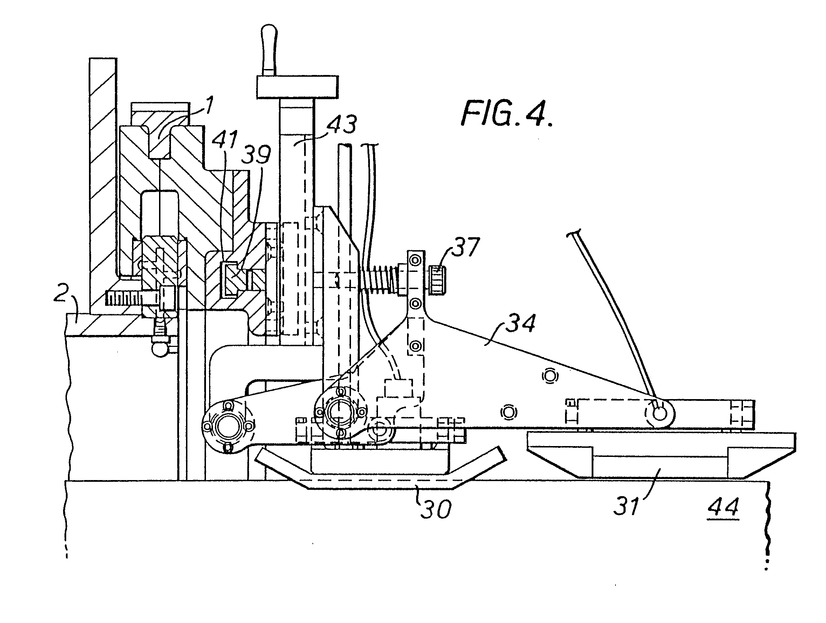

As can be seen from Figures 2 and 4, at the trailing end of the apparatus, on arc members similar to those at the leading end of the apparatus are located a further pair of ultrasonic testing devices 14 and 15 and an eddy current weld following device 28 extending beyond the rotor assembly in the direction of the axis of the apparatus. These devices comprise shoes 29, 30 and 31, gimbal mounted on floating arms 32, 33 and 34 capable of pivoting movement limited by set screws 35, 36 and 37.

It is to be noted that the devices at both ends of the apparatus may be adjusted in their arc members by rails 38 and 39 within arc slots 40 and 41 for relative circumferential disposition and for radial location by means of jacking devices 42 and 43 towards or away from the axis of the apparatus. By this means the appropriate radial disposition for a steel tube 44 to be tested, and the circumferential disposition for optimum angular alignment about the tube can be arranged.

One pair of ultrasonic testing devices will be arranged to operate by means of shear wave techniques, the other pair by surface wave techniques.

The apparatus is designed to enable the rotor, together with its associated eddy current and ultrasonic testing devices to be rotated at least 90° either way from the "top" position which is shown in Figure 1, so that the weld line can be followed over a variation of at least 180° about the periphery of the tube to be tested.

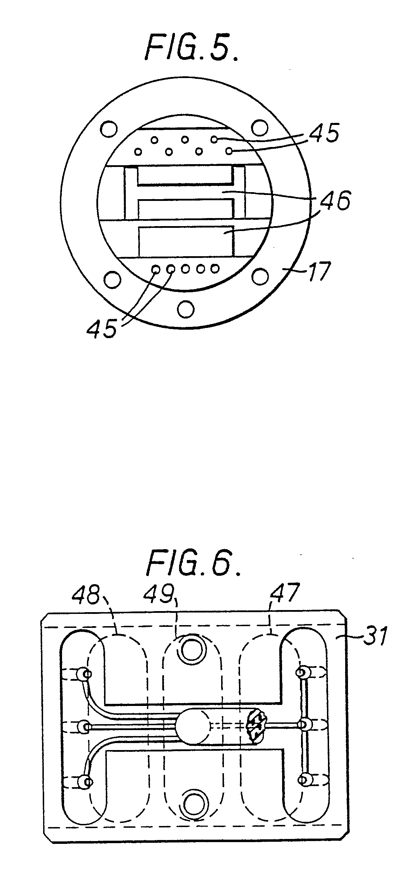

As can be seen from Figure 5 the eddy current testing probe shoe is of a known pattern having water cooling orifices 45 and testing coils 46 and is arranged to provide a signal indicative of flux variations along the weld line showing the presence of faults.

Similarly the weld following probe shoe 28 is shown in Figure 6. It has secondary coils 47 and 48 one on each side of the supposed weld line and a primary coil 49 above the supposed line of the weld, provide accurate weld line following in a known manner.

Calibration of the ultrasonic aspects of the apparatus illustrated can be readily achieved by removing one or more of the arc members carrying the ultrasonic probes from the rotor and placing it on an adjacent annular member (not shown) of identical dimensions to the rotor through which a calibration test piece (not shown) can be passed to check on accurate performance of the ultrasonic probes.

As can be seen most clearly in Figure 1, the apparatus is mounted on a table 50 which can be raised. This facility in conjunction with the possibility of varying the separation of the ultrasonic and eddy current devices from the axis of the apparatus, and indeed the possibility of replacing the ultrasonic and eddy devices with others of different dimensions, enables the apparatus to be used in an in-line situation immediately following a welding mill for various diameter tubes with simplicity and speed.

In operation a welded tube 44 passing through the apparatus is picked up by the testing devices and the weld line following device, the latter causing the rotor with the testing probes to turn on the stator of the apparatus as the weld line varies around the periphery of the tube. At the same time by the provision of a magnetic flux from the coil 7, eddy current testing through the eddy current testing device can be carried out, and simultaneously shear wave and surface wave ultrasonic testing from the ultrasonic probe assemblies, coupled to the tube 44 by water, can be carried out.

We have found surprisingly that these two complimentary modes of testing can be carried out simultaneously with the apparatus hereinabove described without adverse affect upon either mode testing.

## Claims

1. Non destructive testing apparatus for testing a longitudinally welded elongate metal body (44) travelling in the direction of its long axis, the apparatus having a plurality of sets of ultrasonic weld line inspection devices (12, 13, 14, 15) mounted on and supported by a rotatable carrier (1) which, in use, is located about the path of travel of the body (44); an eddy current weld line inspection device (11) mounted on said carrier (1); weld line following means (28) connected to the carrier (1) for detecting and following a datum mark along the body; and traversing means (3, 4, 5, 6) controlled by the weld line following means (28) for moving the carrier (1) and the inspection devices (11, 12, 13, 14, 15) about said path of travel to maintain the carrier (1) in a predetermined angular relationship with the datum mark along the body (44).

2. Apparatus as claimed in Claim 1 characterised in that the sets of ultrasonic weld line inspection devices (12, 13, 14, 15) are carried at least one before and one after the eddy current inspection device (11), one being adapted to operate by means of surface wave techniques and the other by shear wave techniques.

3. Apparatus as claimed in Claim 1 or 2 characterised in that the weld line following means is optical equipment arranged to follow an applied datum mark on the body (44).

4. Apparatus as claimed in any one of the preceding claims characterised in that the carrier (1) is mounted for movement on a hollow stator (2).

5. Apparatus as claimed in Claim 4 characterised in that movement of the carrier about the stator (2) is by means of a rotor (1) driven by belt (3) or chain from an adjacent motor (6).

6. Apparatus as claimed in Claim 5 characterised in that the rotor (1) is adapted for rotary movement up to 360°.

7. Apparatus as claimed in Claim 5 or 6 characterised in that the eddy current inspection device comprises a saturation coil (7) in annular form carried by and within the stator (2) and a detector (11) carried by the rotor (1) and located within the saturation coil (7).

8. Apparatus as claimed in Claim 4, 5 or 6 characterised in that each of the inspection devices (11, 12, 13, 14, 15) is mounted on the rotor (1) means of easily removable arc-shaped members (8, 9, 10).

9. Apparatus as claimed in any one of Claims 4 to 8 characterised in that it is mounted on a table (50) capable of vertical movement.

## Revendications

1. Appareil d'essai non destructif destiné à éprouver un long corps métallique soudé (44) qui se déplace dans le sens de son axe longitudinal, cet appareil comportant plusieurs jeux de dispositifs d'inspection ultrasoniques de ligne de soudure (12, 13, 14 et 15) montés sur un support tournant (1) et supportés par ce support qui, en service, est disposé autour du trajet suivi par le corps (44), un dispositif d'inspection à courants de Foucault (11) de la ligne de soudure monté sur le support (1), un dispositif suivant la ligne de soudure (28) relié au support (1) pour détecter et suivre une marque de référence le long du corps et un dispositif de chariotage (3, 4, 5 et 6) commandé par le dispositif suivant la ligne de soudure (28) pour déplacer le support (1) et les dispositifs d'inspection (11, 12, 13, 14 et 15) autour du trajet pour maintenir le support (1) dans une disposition angulaire prédéterminée par rapport à la marque de référence le long du corps (44).

2. Appareil suivant la revendication 1, caractérisé en ce que les jeux de dispositifs d'inspection ultrasoniques de la ligne de soudure (12, 13, 14, 15) sont montés à raison d'au moins un devant et d'au moins un derrière le dispositif d'inspection à courants de Foucault (11), l'un fonctionnant selon des techniques faisant appel à des ondes de surface et l'autre, selon des techniques faisant appel à des ondes de cisaillement.

3. Appareil suivant la revendication 1 ou 2, caractérisé en ce que le dispositif suivant la ligne de soudure est un matériel optique propre à suivre une marque de référence appliquée sur le corps (44).

4. Appareil suivant l'une quelconque des revendications précédentes, caractérisé en ce que le support (1) est monté de manière à se déplacer sur un stator creux (2).

5. Appareil suivant la revendication 4, caractérisé en ce que le déplacement du support autour du stator (2) s'effectue au moyen d'un rotor (1) entraîné par une courroie (3) ou une chaîne à partir d'un moteur (6) adjacent.

6. Appareil suivant la revendication 5, caractérisé en ce que le rotor (1) peut effectuer un mouvement de rotation allant jusqu'à 360°.

7. Appareil suivant la revendication 5 ou 6, caractérisé en ce que le dispositif d'inspection à courants de Foucault comprend un enroulement de saturation (7) de forme annulaire supporté par le stator (2) et à l'intérieur de celui-ci et un détecteur (11) supporté par le rotor (1) et placé dans l'enroulement de saturation (7).

8. Appareil suivant le revendication 4, 5 ou 6, caractérisé en ce que chaque dispositif d'inspection (11, 12, 13, 14, 15) est monté sur le rotor (1) au moyen de segments arqués aisément amovibles (8, 9, 10).

9. Appareil suivant l'une quelconque des revendications 4 à 8, caractérisé en ce qu'il est monté sur une table (50) pouvant être déplacée verticalement.

## Patentansprüche

1. Nicht-zerstörende Testvorrichtung zum Testen eines in Längsrichtung geschweißten langgestreckten Metallkörpers (44), der sich in Richtung seiner Längsachse bewegt, wobei die Vorrichtung eine Mehrzahl von Sätzen von Ultraschall-Schweißnaht-Inspektions-geräten (12, 13, 14, 15) aufweist, die auf einem drehbaren, bei Gebrauch um die Bewegungsbahn des Körpers (44) herum angeordneten Träger (1) angeordnet und von diesem getragen sind, ein Wirbelstrom-Schweißnaht-Inspektionsgerät (11), welches auf dem Träger (1) befestigt ist, eine mit dem Träger (1) verbundene Schweißnaht-Folgeeinrichtung (28) zum Aufspüren und Folgen einer Bezugsmarke entlang des Körpers, sowie eine von der Schweißnaht-Folgeeinrichtung (28) gesteuerte Verschwenkungseinrichtung (3, 4, 5, 6) zum Bewegen des Trägers (1) und der Inspektionsgeräte (11, 12, 13, 14, 15) um die Bewegungsbahn herum, um den Träger (1) in einer vorbestimmten Winkelbeziehung zur Bezugsmarke entlang des Körpers (44) zu halten.

2. Vorrichtung nach Anspruch 1, dadurch gekennzeichnet, daß von den Sätzen von Ultraschall-Schweißnaht-Inspektionsgeräten (12, 13, 14, 15) zumindest einer vor und einer hinter dem Wirbelstrom-Inspektionsgerät (11) angeordnet sind, wobei einer mittels Oberflächenwellentechnik und einer mittels Scherungswellentechnik arbeitet.

3. Vorrichtung nach Anspruch 1 oder 2, dadurch gekennzeichnet, daß die Schweißnaht-Folgeeinrichtung eine optische Ausrüstung ist, welche so ausgebildet ist, daß sie einer auf den Körper (44) aufgebrachten Bezussmarke folgt.

4. Vorrichtung nach einem der vorhergehenden Ansprüche, dadurch gekennzeichnet, daß der Träger (1) auf einem hohlen Stator (2) beweglich angeordnet ist.

5. Vorrichtung nach Anspruch 4, dadurch gekennzeichnet, daß die Bewegung des Trägers um den Stator (2) mittels eines Rotors (1) erfolgt, der mittels eines Riemens (3) oder einer Kette von einem nahegelegenen Motor (6) angetrieben ist.

6. Vorrichtung nach Anspruch 5, dadurch gekennzeichnet, daß der Rotor (1) eine Rotationsbewegung bis 360° durchführen kann.

7. Vorrichtung nach Anspruch 5 oder 6, dadurch gekennzeichnet, daß das Wirbelstrom-Inspektionsgerät eine ringförmige Sättigungsspule (7) umfaßt, die vom und innerhalb des Stators (2) getragen ist, sowie einen Detektor (11), der vom Rotor (1) getragen ist und innerhalb der Sättigungsspule (7) angeordnet ist.

8. Vorrichtung nach Anspruch 4, 5 oder 6, dadurch gekennzeichnet, daß jedes der Inspektionsgeräte (11, 12, 13, 14, 15) auf dem Rotor (1) mittels leicht entfernbarer bogenförmiger Glieder (8, 9, 10) befestigt ist.

9. Vorrichtung nach einem der Ansprüche 4 bis 8, dadurch gekennzeichnet, daß sie auf einem vertikal bewegbaren Tisch (50) befestigt ist.

# FIG.1.

# FIG. 2.

FIG.3.

FIG.4.

0 057 068

0 057 068

FIG.5.

FIG.6.